# DEMANDE DE BREVET EUROPEEN

(11) **EP 4 667 261 A1**
(43) Date de publication de la demande: **24.12.2025**
(21) Numéro de dépôt: 25177375.0
(22) Date de dépôt: 19.05.2025
(51) Int. Cl.: B60K 15/03

(54) **SUPPORT D ÉCRAN DE PROTECTION THERMIQUE POUR VÉHICULE AUTOMOBILE DOTÉ D'UN RÉSERVOIR À CARBURANT SOUS-PLANCHER**

(30) Priorité: 19.06.2024 FR 2406576
(71) Demandeur: Stellantis Auto SAS, 78300 Poissy (FR)
(72) Inventeur: THOR, TOU, 25150 PONT DE ROIDE VERMONDANS (FR); BESSETTE, DAMIEN, 25150 ECOT (FR); PLUCHAUD, ERIC, 25260 MONTENOIS (FR)
(74) Mandataire: BCIP

(57) **Abrégé**

L'invention concerne un support (100) d'écran de protection thermique pour véhicule automobile, comportant :
- une semelle supérieure (110) s'étendant selon un plan sensiblement horizontal et destinée à être fixée contre la face inférieure du plancher d'assise dudit véhicule,
- une semelle inférieure (120) s'étendant suivant un plan sensiblement parallèle à celui de ladite semelle supérieure (110) et comprenant des moyens de fixation (121) pour ledit écran, et
- une âme de liaison (130) s'étendant entre lesdites semelles (110, 120) auxquelles elle est raccordée par deux lignes de pliage transversales (L_{S}, L_{I}) ;
caractérisé en ce qu'il comporte également une joue latérale interne (150) s'étendant suivant un plan vertical perpendiculaire aux dites lignes de pliage transversales (L_{S}, L_{I}) et formant la limite latérale extrême côté interne dudit support.

## Description

### [Domaine technique]

La présente invention concerne la problématique de la protection, en cas de choc latéral, du réservoir à carburant sous-plancher d'un véhicule automobile doté d'un écran de protection thermique agencé transversalement à proximité de ce réservoir. Elle vise en particulier un support pour un tel écran de protection thermique.

### [Technique antérieure]

Les véhicules automobiles de type hybride comportent généralement, outre une première chaîne de propulsion thermique reliée au train de roues avant, une seconde chaîne de propulsion électrique reliée au train de roues arrière.

La chaine de propulsion thermique comprend classiquement un moteur thermique implanté au-devant du tablier avant entre deux brancards latéraux de la structure de caisse. La chaîne de propulsion électrique comprend quant à elle un moteur électrique à courant alternatif, tel que par exemple un moteur électrique synchrone à aimants permanents, implanté au niveau d'un berceau de fixation du train arrière conçu pour délimiter un espace incompressible en cas de choc arrière.

Le bloc-batterie assurant l'alimentation électrique du moteur électrique est classiquement implanté sous le plancher avant du véhicule s'étendant entre le tablier avant et la planche à talon. Un réservoir à carburant pour la motorisation thermique est en outre positionné, en amont du moteur électrique, sous le plancher d'assise s'étendant au niveau de l'assise de rang deux à l'arrière de la planche à talon et du bloc-batterie.

Une ligne d'échappement des gaz chauds s'étend par ailleurs depuis le moteur thermique jusqu'au pare-chocs arrière du véhicule, en contournant latéralement le bloc-batterie et le réservoir à carburant.

Afin de protéger certains éléments sensibles tels qu'en particulier le réservoir à carburant de la chaleur dégagée par cette ligne d'échappement, il est courant de prévoir un écran de protection thermique s'étendant au moins au niveau de la portion latérale du plancher d'assise bordant transversalement ce réservoir à carburant et traversée par la ligne d'échappement.

Un tel écran de protection thermique est classiquement réalisé à partir de plusieurs pièces flexibles thermiquement isolantes conformées par emboutissage et assemblées les unes aux autres pour définir ensemble une gouttière enveloppant cette ligne d'échappement.

Afin d'assurer la fixation des différentes pièces les unes aux autres et contre le plancher d'assise, il est connu d'utiliser un support d'attache en tôle comportant :
- une semelle supérieure s'étendant selon un plan sensiblement horizontal et destinée à être fixée contre la face inférieure du plancher d'assise dudit véhicule,
- une semelle inférieure s'étendant suivant un plan sensiblement parallèle à celui de ladite semelle supérieure et comprenant des moyens de fixation pour l'écran de protection thermique, et
- une âme de liaison s'étendant entre lesdites semelles auxquelles elle est raccordée par deux lignes de pliage transversales.

Les pièces flexibles formant l'écran de protection thermique présentant une faible résistance mécanique, les vibrations générées pendant les phases de roulage du véhicule et se transmettant à ces pièces via le support peuvent causer des mouvements relatifs entres elles pouvant générer sur ces dernières des déchirures locales entrainant une perte sensible d'efficacité de cet écran.

Avant leur mise sur le marché, les véhicules automobiles doivent par ailleurs être soumis à de nombreux protocoles de test permettant d'évaluer notamment leur niveau de sécurité passive.

Le protocole de test en choc latéral consiste à faire rencontrer par le véhicule un poteau à une vitesse de 32km/h avec un angle de 75° par rapport à la direction longitudinale de ce véhicule, ce poteau étant positionné de sorte à ce qu'il percute le véhicule au niveau de la portière latérale avant côté conducteur.

Un tel choc latéral a ainsi tendance à entrainer un cloquage du plancher d'assise générant un déplacement transversal du support de l'écran de protection thermique en direction du réservoir à carburant pouvant entrainer un risque non négligeable de perçage de ce dernier en cas de contact entre ces deux éléments.

### [Exposé de l'invention]

La présente invention vise à améliorer la situation.

Elle propose à cet effet un support d'écran de protection thermique pour véhicule automobile, comportant :
- une semelle supérieure s'étendant selon un plan sensiblement horizontal et destinée à être fixée contre la face inférieure du plancher d'assise dudit véhicule,
- une semelle inférieure s'étendant suivant un plan sensiblement parallèle à celui de ladite semelle supérieure et comprenant des moyens de fixation pour ledit écran, et
- une âme de liaison s'étendant entre lesdites semelles auxquelles elle est raccordée par deux lignes de pliage transversales ;
caractérisé en ce qu'il comporte également une joue latérale interne s'étendant suivant un plan vertical perpendiculaire aux dites lignes de pliage transversales et formant la limite latérale extrême côté interne dudit support.

L'adjonction de cette joue latérale interne formant surface plane de butée permet ainsi de limiter drastiquement les risques de perçage du réservoir à carburant en cas de choc latéral. Elle permet en outre d'apporter de la raideur à la semelle inférieure sur laquelle vient s'arrimer l'écran de protection thermique, de sorte à éviter l'apparition de déchirures sur ce dernier pendant les phases de roulage.

Selon des caractéristiques préférées dudit support selon l'invention :
- ladite joue latérale est raccordée au bord latéral interne de ladite semelle inférieure par un premier arrondi convexe de liaison longitudinal, et en ce que cette joue latérale est également raccordée au bord latéral interne de ladite âme de liaison par un second arrondi convexe de liaison vertical ;
- le rayon de courbure desdits arrondis de liaison est supérieur ou égal à 2 millimètres ;
- lesdits arrondis de liaison et ladite ligne de pliage inférieure se rejoignent pour former un coin arrondi de raccordement ;
- ladite joue latérale se présente sous la forme d'un L comprenant une première bande d'orientation longitudinale s'étendant le long et au-dessus dudit arrondi de liaison longitudinal sur une hauteur prédéterminée, et une seconde bande d'orientation verticale s'étendant le long et au-devant dudit arrondi de liaison vertical sur une largeur prédéterminée ;
- ladite hauteur prédéterminée et ladite largeur prédéterminée sont supérieures ou égale à 2 millimètres ;
- le coin interne libre de ladite semelle inférieure, opposé à ladite ligne de pliage inférieure, est arrondi, ladite première bande et le premier arrondi convexe de liaison longitudinal se prolongeant le long de ce coin interne libre arrondi ;
- ladite joue latérale interne est constituée par un premier rebord tombé interne rabattu à 90° par pliage vers le haut depuis et le long d'au moins une portion du bord latéral interne de ladite semelle inférieure, et par un second rebord tombé interne rabattu à 90° par pliage vers ce premier rebord tombé interne depuis et le long d'au moins une portion du bord latéral interne de ladite âme de liaison ; et/ou
- lesdits rebords tombés internes sont fixés l'un à l'autre par au moins un point de soudure électrique.

L'invention vise également sous un second aspect un véhicule automobile comportant un plancher d'assise sous lequel est implanté un réservoir à carburant, une ligne d'échappement traversant longitudinalement ledit plancher d'assise en contournant latéralement ledit réservoir à carburant, un écran de protection thermique s'étendant au moins au niveau d'une portion latérale dudit plancher d'assise bordant transversalement ledit réservoir à carburant et traversée par ladite ligne d'échappement, caractérisé en ce que ledit écran est fixé audit plancher d'assise par un tel support.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
- [Fig 1] représente une vue partielle de coupe en perspective, prise selon un plan de coupe transversal vertical, de la partie inférieure d'un véhicule automobile comprenant un plancher d'assise contre lequel est fixé un support conforme à un premier mode de réalisation de l'invention et auquel est lui-même fixé un écran de protection thermique ;
- [Fig 2] est une vue en perspective du support pour écran de protection thermique de la figure 1 ;
- [Fig 3] représente une vue de dessus du support pour écran de protection thermique de la figure 1 ;
- [Fig 4] est une vue en latérale en élévation du support pour écran de protection thermique de la figure 1 ; et
- [Fig 5] représente une vue en perspective d'un support pour écran de protection thermique conforme à un second mode de réalisation de l'invention.

### [Description détaillée]

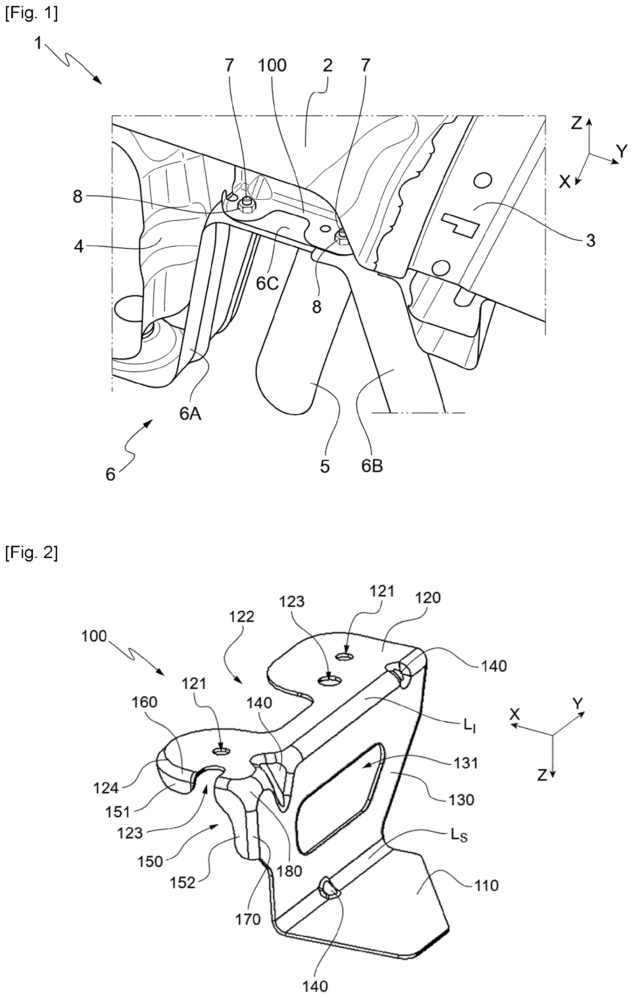

La figure 1 représente une vue partielle de la partie inférieure d'un véhicule automobile 1 de type hybride.

On définit par rapport à ce véhicule 1 un repère orthogonal XYZ comprenant trois axes perpendiculaires deux à deux, à savoir :
- un axe X, définissant une direction longitudinale, horizontale, parallèle au sol et confondu avec la direction générale de déplacement du véhicule
- un axe Y, définissant une direction transversale, horizontale, également parallèle au sol et qui avec l'axe X définit un plan XY horizontal, et
- un axe Z, définissant une direction verticale, perpendiculaire au sol ainsi qu'au plan XY horizontal.

Dans la suite de la description et en référence au repère défini ci-dessus, les termes « longitudinal » ou « longitudinalement » feront référence à une direction parallèle à l'axe X, les termes « transversal » ou « transversalement » feront référence à une direction parallèle à l'axe Y, et les termes « vertical » ou « verticalement » feront référence à une direction parallèle à l'axe Z.

D'autre part et par convention, les termes « inférieur », « supérieur », « avant » et « arrière » s'entendront par rapport à l'orientation générale du véhicule. Les termes « inférieur » et « bas » indiqueront une proximité avec le sol plus importante selon la direction verticale que les termes « supérieur » ou « haut ». Le terme « avant » indiquera un positionnement orienté vers le devant d'un véhicule selon la direction horizontale et le terme « arrière » indiquera un positionnement orienté vers l'arrière d'un véhicule selon la même direction horizontale.

Les termes « externe » et « interne » seront quant à eux utilisés pour définir la position relative d'un élément par référence au plan longitudinal vertical médian du véhicule. L'élément le plus proche de ce plan sera ainsi qualifié d'interne par opposition à l'autre élément plus éloigné de ce même plan qui sera quant à lui qualifié d'externe.

Enfin, l'utilisation du terme « sensiblement » indiquera qu'un léger écart est admis par rapport à une position ou disposition nominale prédéterminée, tout en restant inclus dans le cadre de l'invention. Par exemple, « sensiblement vertical » indiquera qu'un écart de l'ordre de 10° à 25° par rapport à une orientation strictement verticale est admis dans le cadre de l'invention.

En référence à cette figure 1, le véhicule automobile 1 comporte un plancher d'assise 2 s'étendant transversalement deux longerons de bas de caisse 3 (seul celui de gauche étant partiellement visible sur cette figure 1) et sous lequel est implanté un réservoir à carburant 4 pour la motorisation thermique.

Le véhicule 1 comporte également une ligne d'échappement 5 traversant longitudinalement le plancher d'assise 2 en contournant latéralement le réservoir à carburant 4.

Afin de protéger certains éléments sensibles tels qu'en particulier le réservoir à carburant 4 de la chaleur dégagée par cette ligne d'échappement 5, le véhicule 1 comporte en outre un écran de protection thermique 6 s'étendant au moins au niveau de la portion latérale gauche du plancher d'assise 2 bordant transversalement ce réservoir à carburant 4 et traversée par la ligne d'échappement 5.

Cet écran de protection thermique 6 est constitué de plusieurs pièces thermiquement isolantes 6A, 6B, 6C conformées par emboutissage et assemblées les unes aux autres pour définir ensemble une gouttière enveloppant cette ligne d'échappement 5.

Ces pièces 6A, 6B, 6C sont réalisées chacune dans un film flexible comprenant typiquement au moins une couche isolante en céramique déposée sur une feuille en aluminium.

Afin d'assurer la fixation des différentes pièces 6A, 6B, 6C constituant l'écran de protection thermique 6 les unes aux autres et contre le plancher d'assise 2, un support d'attache 100 selon l'invention est implanté fixement sous ce plancher d'assise 2 au niveau de sa portion latérale gauche bordant transversalement ce réservoir à carburant 4.

On va maintenant décrire plus en détails le support 100 à l'appui des figures 2 à 4 sur lesquelles il est représenté seul. Son orientation sur ces figures 2, 3, 4 vis-à-vis du repère orthogonal XYZ est conforme à sa position de montage sur le véhicule 1.

Le support d'attache 100 est obtenu par emboutissage à partir d'une feuille de tôle métallique (de préférence en acier double-phase) préalablement découpée et présentant une épaisseur comprise par exemple entre 1,3 et 1,6 millimètre.

Présentant une section sensiblement en forme de Z à angles droits, le support de fixation 100 comporte :
- une semelle supérieure 110 s'étendant selon un plan sensiblement horizontal et destinée à être fixée par des points de soudure électriques (PSE) contre la face inférieure du plancher d'assise 2 du véhicule automobile 1 ;
- une semelle inférieure 120 s'étendant suivant un plan sensiblement parallèle à celui de la semelle supérieure 110 et comprenant des moyens de fixation 121 permettant d'y arrimer rigidement entre elles et au plancher d'assise 2 les différentes pièces thermiquement isolantes 6A, 6B, 6C constituant l'écran de protection thermique 6 ; et
- une âme de liaison 130 s'étendant entre la semelle supérieure 110 et la semelle inférieure 120 suivant un plan sensiblement vertical et perpendiculaire à ceux de ces semelles 110, 120, cette âme de liaison 130 étant raccordée à ces semelles supérieure 110 et inférieure 120 par deux lignes de pliage transversales supérieure L_{S} et inférieure L_{I}.

Les moyens de fixation permettant l'arrimage des pièces 6A, 6B, 6C de l'écran 6 sont avantageusement constitués par au moins un orifice circulaire de vissage 121 prévu, tel qu'illustré par la figure 1, pour être traversé par une vis 7 venant ensuite se visser sur un écrou 8 éventuellement serti sur le pourtour supérieur de cet orifice 121.

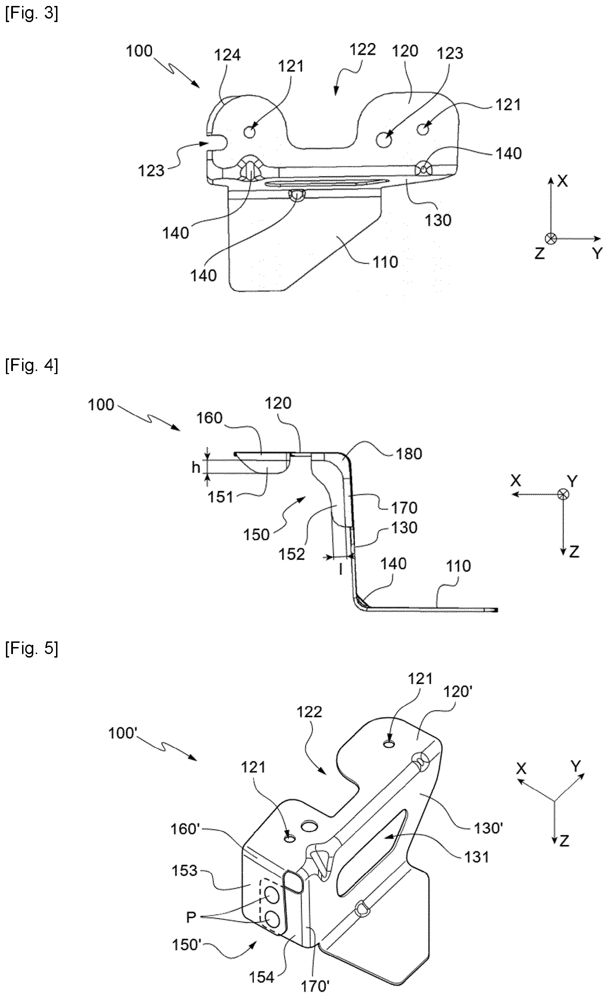

En l'espèce et comme illustré par les figures 2 et 3, ces moyens de fixation comprennent deux orifices circulaires de vissage 121, écartés transversalement l'un de l'autre.

Comme on peut le remarquer sur la figure 1, une première vis 7 traverse successivement deux portions superposés des pièces 6A et 6C ainsi que le l'orifice 121 le plus proche du réservoir à carburant 4, tandis qu'une seconde vis 7 traverse successivement deux portions superposés des pièces 6A et 6B ainsi que l'orifice 121 le plus éloigné de ce réservoir à carburant 4.

Dans le but d'alléger le support 100, sa semelle inférieure 120 présente avantageusement une échancrure 122 dans sa zone centrale située transversalement entre les deux orifices de fixation 121.

Toujours avec le même objectif de réduction de sa masse, l'âme de liaison 130 de ce support 100 est préférentiellement pourvue d'un évidemment 131 ménagé dans sa zone centrale.

Afin de renforcer la tenue mécanique à la torsion du support 100, un ou plusieurs bossages de renfort 140 sont avantageusement ménagés sur chacune des lignes de pliage supérieure L_{S} et inférieure L_{I}.

Le support 100 comprend en outre de manière avantageusement un ou plusieurs trous et/ou découpes de pré-positionnement 123, ménagés en l'espèce sur sa semelle inférieure 120 et destinés à coopérer par emboitement avec des pions de guidage ménagés sur la presse d'emboutissage afin de garantir un pré-positionnement optimal de la feuille de tôle formant ce support 100 sur cette presse d'emboutissage avant son actionnement.

Selon l'invention, le support 100 comporte par ailleurs une joue latérale interne 150 s'étendant suivant un plan vertical perpendiculaire aux lignes de pliage transversales L_{S}, L_{I} et formant la limite latérale extrême côté interne de ce support 100.

Cette joue latérale interne 150 formant une surface plane de butée pour le réservoir à carburant 4 permet ainsi de limiter drastiquement les risques de perçage de ce réservoir en cas de choc latéral. Elle permet en outre d'apporter de la raideur à la semelle inférieure 120 sur laquelle vient s'arrimer l'écran de protection thermique 6, de sorte à éviter l'apparition de déchirures sur ce dernier pendant les phases de roulage.

La joue latérale 150 est raccordée au bord latéral interne de la semelle inférieure 120 par un premier arrondi convexe de liaison longitudinal 160. Cette joue latérale 150 est également raccordée au bord latéral interne de l'âme de liaison 130 par un second arrondi convexe de liaison vertical 170.

Le rayon de courbure de ces arrondis de liaison 160, 170 est avantageusement supérieur ou égal à 2 millimètres, en étant compris de préférence entre 3 et 5 millimètres.

Ces deux arrondis de liaison 160, 170 et la ligne de pliage inférieure L_{I} se rejoignent pour former un coin arrondi de raccordement 180 dont le rayon de courbure est avantageusement supérieur ou égal à 2 millimètres, en étant compris de préférence entre 3 et 5 millimètres.

Afin de limiter sa masse et comme cela est bien visible sur les figures 2 et 4, cette joue latérale 150 se présente préférentiellement sous la forme d'un L comprenant :
- une première bande d'orientation longitudinale 151 s'étendant le long et au-dessus de l'arrondi de liaison longitudinal 160 sur une hauteur prédéterminée h avantageusement supérieure ou égale à 2 millimètres et par exemple comprise entre 3 et 5 millimètres ; et
- une seconde bande d'orientation verticale 152 s'étendant le long et au-devant de l'arrondi de liaison vertical 170 sur une largeur prédéterminée I avantageusement supérieure ou égale à 2 millimètres et par exemple comprise entre 3 et 5 millimètres.

On remarquera également à l'appui des figures 2 et 3 que le coin interne libre 124 de la semelle inférieure 120 (i.e. celui opposé à la ligne de pliage inférieure L_{I}) est avantageusement arrondi en présentant un rayon de courbure avantageusement supérieur ou égal à 5 millimètres.

Afin de réduire encore plus le risque de perçage du réservoir à carburant 4 en cas de pivotement du support 100 autour d'un axe sensiblement vertical lors d'un choc latéral, la première bande 151 de la joue latérale 150 et le premier arrondi convexe de liaison longitudinal 160 se prolongent avantageusement le long du coin interne libre arrondi 124 de la semelle inférieure 120 (voir en particulier les figures 2 et 3).

On va maintenant décrire rapidement et à l'appui de la figure 5, un support 100' pour écran de protection thermique selon un second mode de réalisation de l'invention.

Dans la suite et sur cette figure 5, on a gardé les mêmes références pour les éléments identiques au premier mode de réalisation décrit précédemment et on a ajouté un prime pour les éléments similaires.

Comme on peut le remarquer en référence à cette figure 5, la joue latérale interne 150' du support 100' est constituée par un premier rebord tombé 153 rabattu à 90° par pliage vers le haut depuis et le long d'au moins une portion du bord latéral interne de la semelle inférieure 120', et par un second rebord tombé 154 rabattu à 90° par pliage vers ce premier rebord tombé 153 depuis et le long d'au moins une portion du bord latéral interne de l'âme de liaison 130'.

Le premier rebord tombé 153 de la joue latérale 150' est raccordé au bord latéral interne de la semelle inférieure 120' par un premier arrondi convexe de liaison longitudinal 160'. Le second rebord tombé 154 de cette joue latérale 150' est quant à lui raccordé au bord latéral interne de la semelle inférieure 120' par un second arrondi convexe de liaison vertical 170'.

Afin d'améliorer la tenue mécanique à la torsion de cette joue latérale interne de butée 150', les rebords tombés internes 153, 154 sont avantageusement fixés l'un à l'autre par au moins un point de soudure électrique P.

Ce second mode de réalisation permet ainsi d'obtenir une joue latérale interne 150' présentant une surface de butée supérieure à celle de la joue 150 du premier mode de réalisation. Toutefois et contrairement à la joue 150, cette joue 150' ne peut pas être réalisée par une unique opération d'emboutissage et nécessite la réalisation de deux opérations de pliage (et éventuellement d'une opération de soudage) à postériori. La masse du support 100' s'avère en outre supérieure à celle du support 100.

De nombreuses variantes sont envisageables et on rappelle à cet égard que la présente invention ne se limite pas aux formes de réalisation décrites et représentées, mais englobe également toutes les variantes d'exécution à la portée de l'homme du métier

## Revendications

1. Support (100 ; 100') d'écran de protection thermique (6) pour véhicule automobile (1), comportant :
- une semelle supérieure (110) s'étendant selon un plan sensiblement horizontal et destinée à être fixée contre la face inférieure du plancher d'assise (2) dudit véhicule (1),
- une semelle inférieure (120 ; 120') s'étendant suivant un plan sensiblement parallèle à celui de ladite semelle supérieure (110) et comprenant des moyens de fixation (121) pour ledit écran (6), et
- une âme de liaison (130 ; 130') s'étendant entre lesdites semelles (110, 120 ; 110, 120') auxquelles elle est raccordée par deux lignes de pliage transversales (L_{S}, L_{I}) ;
**caractérisé en ce qu'**il comporte également une joue latérale interne (150 ; 150') s'étendant suivant un plan vertical perpendiculaire aux dites lignes de pliage transversales (L_{S}, L_{I}) et formant la limite latérale extrême côté interne dudit support.

2. Support (100 ; 100') selon la revendication 1, **caractérisé en ce que** ladite joue latérale (150 ; 150') est raccordée au bord latéral interne de ladite semelle inférieure (120 ; 120') par un premier arrondi convexe de liaison longitudinal (160 ; 160'), et **en ce que** cette joue latérale (150 ; 150') est également raccordée au bord latéral interne de ladite âme de liaison (130 ; 130') par un second arrondi convexe de liaison vertical (170 ; 170').

3. Support (100 ; 100') selon la revendication 2, **caractérisé en ce que** le rayon de courbure desdits arrondis de liaison (160, 170 ; 160', 170') est supérieur ou égal à 2 millimètres.

4. Support (100) selon l'une des revendications 2 ou 3, **caractérisé en ce que** lesdits arrondis de liaison (160, 170) et ladite ligne de pliage inférieure (L_{I}) se rejoignent pour former un coin arrondi de raccordement (180).

5. Support (100) selon l'une des revendications 2 à 4, **caractérisé en ce que** ladite joue latérale (150) se présente sous la forme d'un L comprenant une première bande d'orientation longitudinale (151) s'étendant le long et au-dessus dudit arrondi de liaison longitudinal (160) sur une hauteur prédéterminée (h), et une seconde bande d'orientation verticale (152) s'étendant le long et au-devant dudit arrondi de liaison vertical (170) sur une largeur prédéterminée (I).

6. Support (100) selon la revendication 5, **caractérisé en ce que** ladite hauteur prédéterminée (h) et ladite largeur prédéterminée (I) sont supérieures ou égale à 2 millimètres.

7. Support (100) selon l'une des revendications 5 à 6, **caractérisé en ce que** le coin interne libre (124) de ladite semelle inférieure (120), opposé à ladite ligne de pliage inférieure (L_{I}), est arrondi, ladite première bande (151) et le premier arrondi convexe de liaison longitudinal (160) se prolongeant le long de ce coin interne libre arrondi (124).

8. Support (100') selon l'une revendications 1 à 3, **caractérisé en ce que** ladite joue latérale interne (150') est constituée par un premier rebord tombé interne (153) rabattu à 90° par pliage vers le haut depuis et le long d'au moins une portion du bord latéral interne de ladite semelle inférieure (120'), et par un second rebord tombé interne (154) rabattu à 90° par pliage vers ce premier rebord tombé interne (153) depuis et le long d'au moins une portion du bord latéral interne de ladite âme de liaison (130').

9. Support (100') selon la revendication 8, **caractérisé en ce que** lesdits rebords tombés internes (153, 154) sont fixés l'un à l'autre par au moins un point de soudure électrique (P).

10. Véhicule automobile (1) comportant un plancher d'assise (2) sous lequel est implanté un réservoir à carburant (4), une ligne d'échappement (5) traversant longitudinalement ledit plancher d'assise (2) en contournant latéralement ledit réservoir à carburant (4), un écran de protection thermique (6) s'étendant au moins au niveau d'une portion latérale dudit plancher d'assise (2) bordant transversalement ledit réservoir à carburant (4) et traversée par ladite ligne d'échappement (5), **caractérisé en ce que** ledit écran (6) est fixé audit plancher d'assise (2) par un support (100 ; 100') selon l'une des revendications 1 à 9.
